# EUROPÄISCHE PATENTANMELDUNG

(11) **EP 0 939 005 A1**
(43) Veröffentlichungstag der Anmeldung: **01.09.1999**
(21) Anmeldenummer: 99101300.4
(22) Anmeldetag: 25.01.1999
(51) Int. Cl.: B60R 5/04, B60R 7/02

(54) **Vorrichtung zum Befestigen von Gegenständen im Gepäckraum eines Kraftfahrzeuges**

(30) Priorität: 28.01.1998 DE 19803210
(71) Anmelder: HS Products AG Systemtechnik und Produktmanagement, 82152 Krailling (DE)
(72) Erfinder: Hausrath, Udo, 82319 Starnberg (DE); Rösch, Christoph, 82229 Seefeld (DE); Henke, Ulrich, 52531 Übach-Palenberg (DE)
(74) Vertreter: Nöth, Heinz, Dipl.-Phys.

(57) **Zusammenfassung**

Eine als multifunktionales Trägersystem ausgebildete Vorrichtung zum Befestigen von Gegenständen insbesondere im Gepäckraum eines Kraftfahrzeugs mit einer ausziehbaren Trägereinrichtung, an welcher die Gegenstände gelagert und befestigt werden können, wobei die ausziehbare Trägereinrichtung 2 in Fahrzeugslängsrichtung verlaufende an Teleskopträgern 13 gelagerte teleskopierbare Trägerschienen 1 aufweist, an denen unterschiedliche Lastträger, z.B. Querträger 8, an denen die Gegenstände befestigt sind, in verschiedenen Positionen lösbar verriegelbar sind. Die Teleskopträger 13 sind mittels lösbarer Verriegelungen an karosseriefesten Teilen des Fahrzeugs befestigbar.

## Beschreibung

Die Erfindung betrifft eine Vorrichtung nach dem Oberbegriff des Patentanspruches 1.

Eine derartige aus der DE 296 08 955 U1 bekannte Vorrichtung weist zwei Führungselemente auf, in denen teleskopartig verschiebbare Führungsschienen vorgesehen sind. Die Führungselemente sind durch Verbindungselemente für eine parallele Anordnung miteinander verbunden. Die Befestigung dieser Führungseinheit erfolgt mit den Verbindungselementen mittels Schrauben oder anderer Befestigungsmittel am Boden des Laderaumes. Die Verbindungselemente, mit denen die teleskopierbaren Führungselemente bzw. Trägerschienen am Boden des Laderaumes befestigt werden, verlaufen quer zur Fahrzeugslängsrichtung. Die bekannte Vorrichtung ist für eine ständige Befestigung im Kraftfahrzeug bestimmt, woraus eine bleibende Umgestaltung des Gepäckraumes sich ergibt.

Aufgabe der Erfindung ist es, eine Vorrichtung der eingangs genannten Art zu schaffen, die bei einfacher Handhabung ohne karosserieseitige Änderungen im Gepäckraum eines Kraftfahrzeuges eingesetzt werden können.

Diese Aufgabe wird erfindungsgemäß durch die kennzeichnenden Merkmale des Patentanspruches 1 gelöst.

Hierzu besitzt die ausziehbare Trägereinrichtung zwei in Fahrzeuglängsrichtung verlaufende teleskopierbare Trägerschienen, die entlang den beiden Seitenbegrenzungen des Gepäckraumes des Kraftfahrzeugs angeordnet werden. Jede der beiden teleskopierbaren Trägerschienen wird in einem länglichen, sich in Fahrzeuglängsrichtung erstreckenden Teleskopträger geführt. Jeder der beiden Teleskopträger ist an der Fahrzeugkarosserie oder an karosseriefesten Fahtrzeugteilen lösbar verriegelt. Ferner sind an den Trägerschienen Fixiermittel zum lösbaren Befestigen unterschiedlicher Lastträger, beispielsweise von staubförmigen quer zur Fahrzeuglängsrichtung verlaufenden Querträgern oder einer Ladeplattform vorgesehen. Die Lastträger sind so ausgebildet, daß an ihnen Gegenstände befestigt werden können.

Um die Teleskopträger, an denen die teleskopierbaren Trägerschienen geführt sind, mit der Fahrzeugkarosserie bzw. den karosseriefesten Fahrzeugteilen zu verbinden, können die Teleskopträger an ihren beiden Enden lösbare Verriegelungen aufweisen. Die jeweilige teleskopierbare Trägerschiene kann aus einer außen liegenden Trägerschiene und einer innen liegenden Trägerschiene bestehen, wobei die innen liegende Trägerschiene mit dem Teleskopträger fest verbunden ist und die außen liegende Trägerschiene die Fixiermittel für die Lastträger aufweist. Zwischen diesen beiden Schienen kann eine weitere Schiene zur Verlängerung des Teleskopsauszugs vorgesehen sein. Derartige Teleskopauszüge sind bekannt.

Die Fixiermittel können in der Weise ausgebildet sein, daß sie zur Befestigung von Querträgern in verschiedenen Positionen in Fahrzeuglängsrichtung an der äußeren Trägerschiene lösbar befestigt werden können. Hierbei können auch zwei oder mehr Querträger in bestimmten Abständen voneinander an den Trägerschienen befestigt werden. Ferner kann die jeweils außen liegende Trägerschiene eine Längsnut, die sich in Fahrzeuglängsrichtung erstreckt, aufweisen. Diese Längsnut kann zum Verschieben der Querträger in Längsrichtung entlang der Trägerschienen beim Auffinden der entsprechenden Position dienen. Ferner kann die Längsnut zur Lagerung der Plattform dienen, wobei die beiden Längskanten der Plattform in die Führungsnuten der beiden Trägerschienen eingesetzt ist. Auch für die Plattform können Fixiermittel vorgesehen sein, um die Plattform an der außen liegenden Trägerschiene zu befestigen.

Die Arretier- und Verriegelungseinrichtungen, mit denen die Teleskopträger an der Karosserie bzw. den karosseriefesten Teilen lösbar verbunden werden und mit denen die lösbare Befestigung des jeweiligen Lastträgers an den Trägerschienen im Bereich der Fixiermittel erfolgt, können von Hand betätigbar sein. Hierdurch ist es möglich, ohne Spezialwerkzeuge die Befestigungsvorrichtung im Kraftfahrzeug, welches ein auf dem Markt befindliches Kraftfahrzeug, beispielsweise Kombifahrzeug, Caravan, Minivan und dergl. sein kann, lösbar je nach Bedarf zu befestigen.

Am jeweiligen Lastträger (Querträger, Ladeplattform) können ebenfalls von Hand ohne zusätzliches Werkzeug lösbare Verriegelungen vorgesehen sein, um die zu transportierenden Gegenstände mit dem Lastträger fest zu verbinden.

Hierzu kann am Querträger wenigstens ein entlang dem Querträger verschiebbares Aufsatzelement vorgesehen sein, das in verschiedenen Positionen längs dem Querträger, insbesondere durch Klemmsitz, arretierbar ist. Am Aufsatzelement ist eine Halteeinrichtung vorgesehen, die um eine zur Querträgerlängsausdehnung quer, insbesondere senkrecht und in horizontaler Richtung verlaufende Achse schwenkbar gelagert ist. Die Halteeinrichtung ist hierzu innerhalb eines spitzen Schwenkwinkelbereichs schwenkbar und kann zumindest in den beiden Endstellungen des spitzen Schwenkwinkelbereichs am Aufsatzelement mittels ebenfalls von Hand betätigbarer Verriegelungsmittel fixiert werden. Ein derartiges Aufsatzelement ist auch in bevorzugter Weise anwendbar bei einem Querträger, der an einer beispielsweise außen am Fahrzeug, insbesondere am Dach, vorgesehenen Trägereinrichtung zur Anwendung kommt. Mit diesem Aufsatzelement können Gegenstände verschiedenster Art, z.B. Fahrräder, Ski und andere sich in Längsrichtung des Fahrzeugs erstreckende Geräte und Gegenstände an wenigstens zwei Querträgern lösbar befestigt werden.

Um das Aufsatzelement in verschiedenen Positionen längs dem Querträger zu fixieren, können am Aufsatzelement zwei Klemmbacken vorgesehen sein, von denen wenigstens einer beweglich am Aufsatzelement gelagert ist. Mit Hilfe einer von Hand betätigbaren, vorzugsweise mit Hebelwirkung wirkenden Handbetätigungseinrichtung kann der verschiebbare Klemmbacken aus seiner gelösten Stellung in die Klemmstellung verbracht werden. Das wie eine Klappe ausgebildete Betätigungselement kann eine im Querschnitt gekrümmte Betätigungsfläche aufweisen, welche mit dem beweglichen Klemmbacken in Anlage gebracht wird. Um den Klemmbacken in seine Klemmstellung zu bringen, wird die Betätigungsfläche so gedreht, daß ihr Krümmungsradius sich vergrößert, wodurch der Klemmbacken in die Klemmstellung bewegt wird. Der an dem Betätigungselement vorgesehene klappenförmige Hebelarm, welcher von Hand verschwenkt werden kann, ist wesentlich größer als der Hebelarm, mit welchem die Betätigungsfläche auf den Klemmbacken wirkt. In der Klemmstellung wird die Betätigungseinrichtung durch Selbsthalteeffekt bei heruntergeklapptem Hebelteil des Betätigungselementes gehalten.

Um die Halteeinrichtung in einer der beiden Entstellungen des Schwenkwinkels am Aufsatzelement zu fixieren, können am Aufsatzelement entsprechende Anschläge vorgesehen sein, welche die Halteeinrichtung unbeweglich in der jeweiligen Endstellung halten. Hierzu kann wenigstens einer der Anschläge, welcher auch als Arretierelement zum Arretierung der Halteeinrichtung in einer Zwischenstellung dienen kann, beweglich am Aufsatzelement gelagert sein. Das Arretierelement ist hierzu bevorzugt stiftförmig ausgebildet und erstreckt sich senkrecht zur Längsausdehnung des Querträgers, insbesondere in horizontaler Ebene. Das Arretierelement ist hierbei in seiner axialen Richtung verschiebbar am Aufsatzelement gelagert. Zur Betätigung des Arretierelementes kann dieses mit dem Betätigungselement, mit welchem der bewegliche Klemmbacken betätigt wird, verbunden sein. Dies kann in der Weise geschehen, daß das Betätigungselement des Klemmbackens schwenkbar an einem Ende des stiftförmigen Arretierelementes angeordnet ist, wobei die Schwenkachse des Betätigungselementes senkrecht zur Stiftachse des Arretierelementes verläuft. Das bedeutet, daß mit Hilfe des Betätigungselementes für den beweglichen Klemmbacken auch das stiftförmig ausgebildete Arretierelement in und außer Arretierposition gebracht werden kann.

Die Halteeinrichtung wird normalerweise in einer etwa horizontalen Endstellung gehalten und kann in einer oberen oder unteren Endstellung verstellbar bzw. verschwenkbar am Aufsatzelement gelagert sein. Dadurch, daß die Halteeinrichtung in eine untere oder obere Endstellung verschwenkbar ist, kann die Transporthöhe des jeweiligen Gegenstandes, beispielsweise eines Fahrrades, verringert werden. Auch kann der zu transportierende Gegenstand in eine günstige Transportstellung gebracht werden.

Die Halteeinrichtung ist in der Weise ausgebildet, daß unterschiedliche Halteelemente, mit denen verschiedene Gegenstände befestigt werden können, an der Halteeinrichtung vorgesehen sind. Beispielsweise können Halteelemente gegebenenfalls mit Fixierschrauben, mit denen Gabelenden einer Vorderradgabel eines Fahrrades, ein Vorderradhalter oder Haltestangen und andere Halteelemente befestigt werden können, vorgesehen sein.

Anstelle der Querträger kann als Lastträger eine Ladeplattform, die an ihren beiden in Fahrzeuglängsrichtung verlaufenden Seitenkanten in die Tragschienen einsetzbar ist, vorgesehen sein. An der Ladeplattform ist ebenfalls eine von Hand betätigbare Verriegelungseinrichtung vorgesehen, um für den Transport die Ladeplattform fest mit den Trägerschienen zu verbinden. Die Seitenkanten der Ladeplattform können in die Längsnuten der Trägerschienen für den Transport eingesetzt sein. In diesen Längsnuten kann die Ladeplattform bis in die endgültige Transportstellung verschoben werden, wobei die Verriegelung durch Federkraft selbsttätig in entsprechende Fixiermittel an den Trägerschienen einrastet. An der Ladeplattform können zur Fixierung der zu transportierenden Gegenstände Fixiermittel vorgesehen sein. Diese können in Form von Vertiefungen ausgebildet sein, in die Füße von Behältern mit Federkraft selbsttätig arretierbar einsetzbar sind. Mit Hilfe einer von Hand betätigbaren zentralen Betätigungseinrichtung können die Arretierungen für die Behälterfüße gegen die arretierende Federkraft wieder gelöst werden.

Die Ladeplattform kann aus einer oberen und einer unteren Platte, welche parallel zueinander liegen und dazwischen angeordneten Abstandhaltern, gebildet sein. Durch die Abstandhalter, welche bevorzugt als Rechteckhohlprofile in Stabform ausgebildet sind, wird eine ausreichende Festigkeit der Plattform erreicht. Die beiden Platten und die Abstandhalter können aus relativ dünnem Material hergestellt sein, so daß die Plattform ein nur geringes Gewicht aufweist, jedoch eine ausreichende Festigkeit für den sicheren Transport der Gegenstände, insbesondere Behälter, gewährleistet. Die Plattform kann in bevorzugter Weise aus Leichtmetall, insbesondere Aluminium, hergestellt sein, wobei sie einstückig aus einem Strangpreßprofil gebildet ist.

In vorteilhafter Weise wird durch die Erfindung ein multifunktionell einsetzbares Lade- und Transportsystem für die Anordnung in einem Gepäckraum eines Kraftfahrzeuges geschaffen. Der Einbau und das Herausnehmen dieses Transportsystems aus dem Fahrzeug gestaltet sich einfach, da die hierzu vorgesehenen Arretier- und Verriegelungseinrichtungen leicht von Hand lösbar sind. Werkzeuge sind hier nicht erforderlich. Die Lastträger, insbesondere in Form von Querträgern oder in Form einer Ladeplattform, sind ausziebar am teleskopierbaren Trägerschienensystem gelagert, so daß ein leichtes Beladen in ausgezogener Stellung ermöglicht wird. Bei in Transportstellung eingeschobener Stellung der Trägerschienen werden diese insbesondere an den Teleskopträgern, die am Fahrzeugaufbau lösbar befestigt sind, verriegelt, so daß ein sicherer Transport während des Fahrbetriebs des Fahrzeugs erreicht wird.

Anhand der Figuren wird an Ausführungsbeispielen die Erfindung noch näher erläutert. Es zeigt:
- Fig. 1:: ein Ausführungsbeispiel der Erfindung mit einer Ladeplattform als Lastträger;
- Fig. 2:: ein weiteres Ausführungsbeispiel der Erfindung mit stabförmigen Querträgern als Lastträger;
- Fig. 3:: ein Endstück eines Teleskopträgers;
- Fig. 4(A,B): ein Ausführungsbeispiel für ein von Hand betätigbares Verriegelungselement zur Fixierung eines Querträgers an den Trägerschienen und zur Verriegelung der Trägerschienen am Teleskopträger:
- Fig. 5(A-G):: ein Ausführungsbeispiel für ein auf einen Querträger aufsetzbares Aufsatzelement;
- Fig. 6:: eine Draufsicht auf eine Ladeplattform mit Verriegelungseinrichtungen;
- Fig. 7:: in perspektivischer Ansicht den Aufbau eines Ausführungsbeispiels einer Ladeplattform;
- Fig. 8:: in perspektivischer Darstellung die Oberseite einer Ladeplattform;
- Fig. 9(A-C):: Ausführungsbeispiele für karosseriefeste Bauteile, mit welchen die jeweiligen Enden eines Teleskopträgers lösbar an der Fahrzeugkarosserie, insbesondere im Gepäckraum, befestigbar sind, wobei Fig. 9(A) die lösbare Befestigung des vorderen Endes in Seitenansicht und die Figuren 9(B) in rückwärtiger und 9(C) in seitlicher Ansicht die lösbare Befestigung am hinteren Ende zeigen; und
- Fig. 10(A,B): eine Seitenansicht und eine Draufsicht in schnittbildlicher Darstellung für Befestigungsmittel, mit denen Behälter an einer Plattform lösbar fixiert werden können.

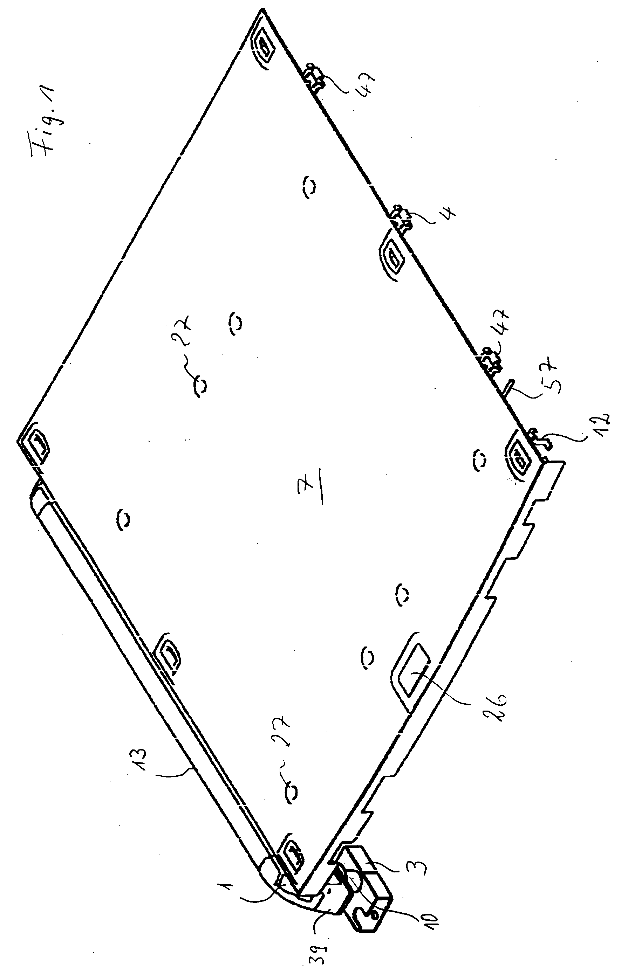

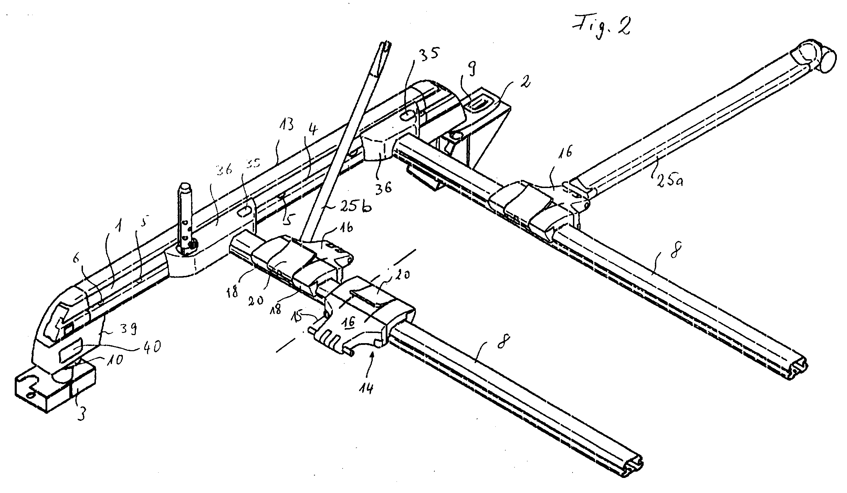

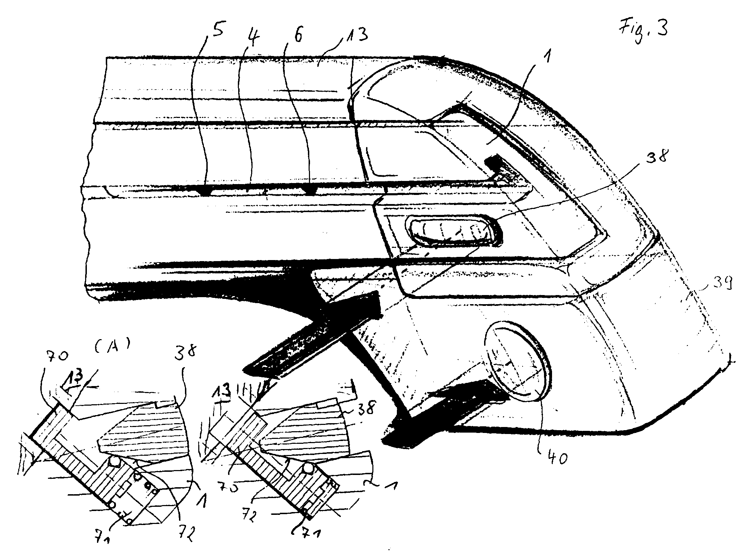

In den Figuren 1 und 2 sind in perspektivischer Darstellung Ausführungsbeispiele einer multifunktionellen Befestigungsvorrichtung für Gegenstände, die im Kofferraum bzw. Gepäckraum eines Kraftfahrzeugs transportiert werden, dargestellt. Die Vorrichtung ist als Multifunktionsträgervorrichtung ausgebildet. Beim Ausführungsbeispiel der Fig. 1 wird als Lastträger eine brettförmige ebene Ladeplattform 7 verwendet. Beim Ausführungsbeispiel der Fig. 2 besteht der Lastträger aus Querträgern 8. Der jeweilige Lastträger (Ladeplattform 7, Querträger 8) ist an seitlichen sich in Fahrzeuglängsrichtung erstreckenden Teleskopträgern 13 gelagert. Jeder der beiden Teleskopträger 13 besitzt teleskopierbare Trägerschienen, welche aus ineinander gesteckten Schienenteilen bestehen, die bei im Gepäckraum des Fahrzeugs eingebauten Multifunktionsträger nach rückwärts aus dem Fahrzeug ausgezogen werden können. Die Ladeplattform 7 bzw. die Querträger 8 sind an jeweiligen äußeren Trägerschiene 1 gelagert. Diese äußeren Trägerschienen 1, welche direkt oder über eine Zwischenschiene an einer nicht näher dargestellten fest am Teleskopträger 13 vorgesehenen Schiene verschiebbar gelagert ist, besitzt eine sich in Fahrzeuglängsrichtung längs erstreckende Führungs- und Lagernut 4 (Figuren 1 und 3). Die Führungsnuten 4 der beiden Trägerschienen 1 befinden sich an den Innenseiten der Teleskopträger 13 und sind im eingebauten Zustand einander zugekehrt. In den Führungsnuten 4 wird die Ladeplattform 7 eingesetzt und gelagert, wie es in der Fig. 1 gezeigt ist. Mittels Gleitelementen (Gleitsteine) 47 kann die Ladeplattform 7 in den Nuten 4 verschoben werden.

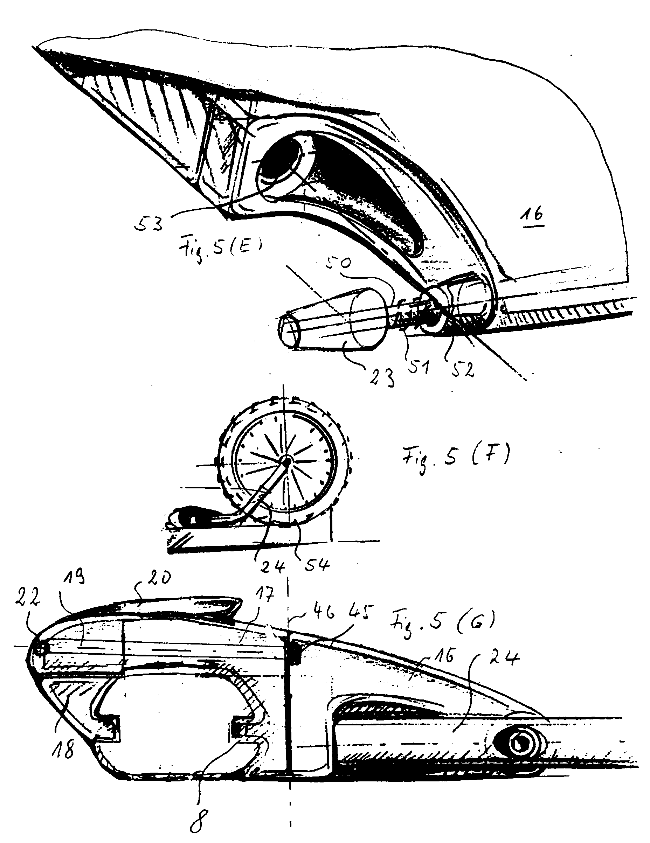

An den Trägerschienen 1 sind ferner in Längsrichtung in bestimmten Abständen voneinander Fixiermittel 5, 6, welche beispielsweise als Vertiefungen ausgebildet sein können, vorgesehen. Beim dargestellten Ausführungsbeispiel befinden sich diese Fixiermittel 5, 6 im Bereich der Führungsnut 4 (Fig. 3). Wie aus der Fig. 6 zu ersehen ist, befinden sich am rückwärtigen Ende der Ladeplattform 7 Eingriffsmittel 57, welche durch Federkraft in die entsprechenden Fixiermittel 6 (Vertiefungen der Trägerschienen 1) eingedrückt werden. Hierdurch wird die Ladeplattform 7 beim Transport fest mit den Trägerschienen 1 verbunden.

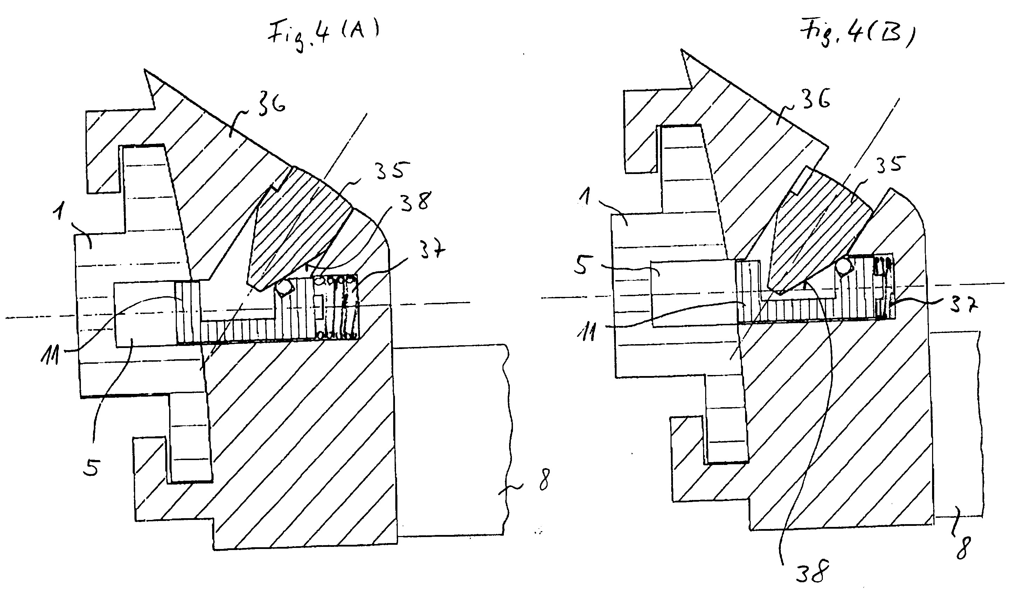

Zur Führung und Fixierung der Querträger 8 (Fig. 2) an den Trägerschienen 1 sind an den Enden der Querträger 8 in Form von Gleitschuhen Endstücke 36 vorgesehen. Querschnitte der Endstücke 36 sind in den Darstellungen der Figuren 4 (A) und (B) gezeigt. Jedes Endstück besitzt ein Eingriffsmittel 11, beispielsweise in Form eines in dem Endstück 36 verschiebbaren Verriegelungselements (Verriegelungsstein). Das Verriegelungselement wird von einer Verriegelungsfeder 37 beaufschlagt und in die Verriegelungsstellung (Fig. 4 (A)) gedrückt. Hierbei kommt das Eingriffsmittel 11 in Eingriff mit einem jeweiligen Fixiermittel 5 (Vertiefung) an der Trägerschiene 1. Hierdurch wird der jeweilige Querträger 8 in Längsrichtung in bestimmten Positionen an den Trägerschienen 1 fixiert. Um den Querträger zu lösen, wird mit Hilfe einer von Hand betätigbaren Drucktaste 35 das Eingriffsmittel 11 außer Eingriff mit dem Fixiermittel 5 gebracht. Hierzu kann an der Drucktaste 35 eine Entriegelungsschräge 38 vorgesehen sein, welche mit dem Eingriffsmittel 11 in der Weise zusammenwirkt, daß beim Niederdrücken der Drucktaste 35 (Fig. 4 (B)) das Eingriffsmittel 11 gegen die Kraft der Verriegelungsfeder 37 außer Eingriff mit dem als Vertiefung ausgebildeten Fixiermittel 5 gebracht wird. Die Querträger 8 können dann in Längsrichtung der Trägerschienen an den Trägerschienen 1 entlang der Nuten 4 verschoben werden und von den Trägerschienen 1 gelöst werden oder in anderen Positionen mit den Trägerschienen 1 fest verbunden werden, wobei wiederum die entsprechenden Eingriffsmittel 11 in den Endstücken 36 mit den Fixiermitteln 5 (Vertiefungen) an den Trägerschienen in Eingriff kommen.

In der in den Figuren 1 bis 3 dargestellten Transportstellung sind die Trägerschienen 1 an den Teleskopträgern 13 verriegelt. Wie aus der Fig. 3 zu ersehen ist, befindet sich die Verriegelung der Trägerschienen am jeweils hinteren Ende des Teleskopträgers 13 und weist eine Drucktaste 38 auf. Die Verriegelung kann in der gleichen Weise ausgebildet sein, wie die in der Fig. 4 dargestellte Verriegelungseinrichtung. Hierzu kann, wie in den Detaildarstellungen (A) und (B) der Fig. 3 gezeigt ist, ein Verriegelungsstein (Verriegelungselement) 70 mittels Federkraft (Druckfeder 71) in eine Verriegelungsstellung gedrückt werden, in welcher die Trägerschiene 1 gegen Herausziehen am Teleskopträger 13 gesichert ist (Detaildarstellung (A). Mittels der von Hand betätigbaren Drucktaste 38 kann die Verriegelung gelöst werden, so daß die Trägerschienen 1 zusammen mit der Plattform 7 bzw. den Querträgern 8 herausgezogen werden können (Detaildarstellung (B)). Auch hierbei kann durch die Drucktaste 38 eine Entriegelungsschräge 72, welche mit dem Verriegelungsstein 70 zusammenwirkt, in der Weise bewegt werden, daß dieser gegen die Kraft der Verriegelungsfeder 71 aus der Verriegelungsstellung gebracht wird.

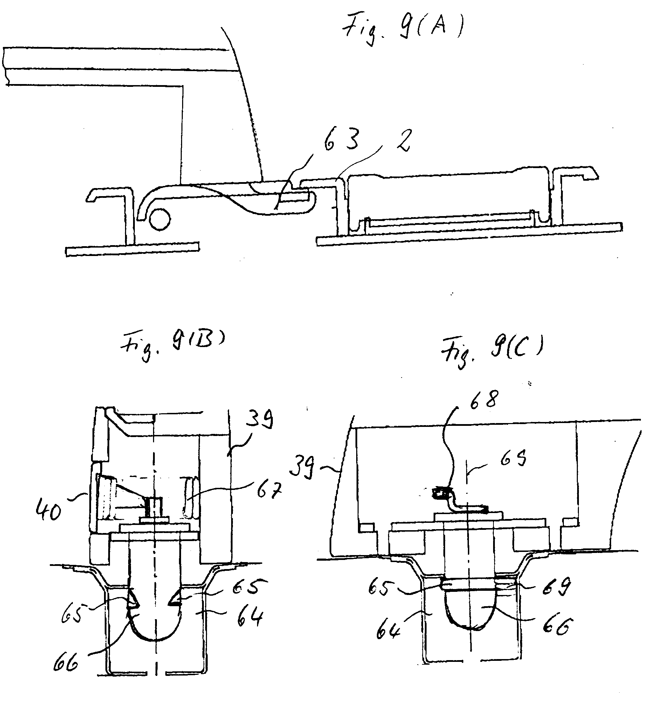

Die beiden sich in Fahrzeuglängsrichtung erstreckenden Teleskopträger 13, an denen die Trägerschienen 1 gelagert sind, werden an karosseriefesten Fahrzeugteilen 2,3 befestigt. Die Befestigung erfolgt in bevorzugter Weise jeweils am vorderen und am hinteren Ende (Fig. 9(A) bis (C)). An den vorderen Enden der Teleskopträger 13 können Einschubteile 63 angeformt sein, die in entsprechende niederdrückbare Teile, beispielsweise Drucktasten für Verzurrösen (Fig. 2 und 9(A)), eingeschoben werden können. An den hinteren Enden (Fig. 9(B) und (C)) besitzen die Teleskopträger 13 Verriegelungsfüße 39, welche eine Verriegelung tragen, die am Gepäckraumboden in Vertiefungen 64 verriegelt werden kann. Die Verriegelung erfolgt in bevorzugter Weise ebenfalls durch Federkraft (Verriegelungsfeder 65). Die Entriegelung wird mittels einer handbetätigbaren Drucktaste 40 entgegen der Rückstellkraft einer Rückstellfeder 67 und der Verriegelungskraft einer Verriegelungsfeder 69 bewirkt. Im Verriegelungszustand, welcher in den Figuren 9(B) und (C) dargestellt ist, greifen von der Verriegelungsfeder 9 beaufschlagte Verriegelungsschenkel 65 in entsprechend geformte seitliche Verriegelungsnuten an einem Verriegelungsbolzen 66 ein, der im Verriegelungszustand in die Vertiefung 64 des Fahrzeugbodens eingesteckt ist. Der Verriegelungsbolzen 66 ist um eine Schwenkachse 69 schwenkbar. Die Verriegelungstaste 40 ist mit einer am Verriegelungsbolzen 66 drehfest verbundenen Kurbel 68 angelenkt. Durch die Kraft der Rückstellfeder 67, welche auf die Drucktaste 40 wirkt, wird der Verriegelungsbolzen 66 in der in den Figuren gezeigten Stellung gehalten, in welcher die beiden Verriegelungsschenkel 65 durch die Verriegelungsfeder 69 in die entsprechenden Verriegelungsnuten eingedrückt werden. Beim Drücken der Drücktaste 40 entgegen der Kraft der Rückstellfeder 67 wird der Verriegelungsbolzen 66 um die Schwenkachse 69 geschwenkt, so daß die Verriegelungsschenkel 65 aus den Verriegelungsnuten herausgedrückt werden und an einer glatten zylindrischen Oberfläche des Verriegelungsbolzens anliegen. Der Verriegelungsbolzen kann dann aus der Vertiefung 64 herausgezogen werden. Um den Verriegelungsbolzen 66 in die verriegelte Position zu bringen, genügt es, den Bolzen in die Vertiefung 64 einzustecken, wobei die Verriegelungsschenkel 65 durch die Kraft der Verriegelungsfeder 69 in die Verriegelungsnuten einschnappen, so daß das hintere Ende des jeweiligen Teleskopträgers 13 gegen Herausziehen gesichert ist.

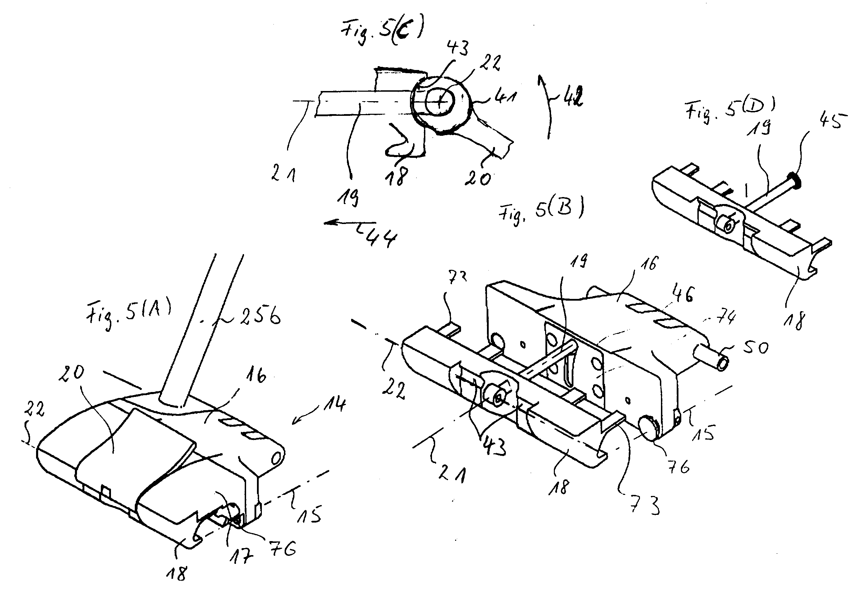

Zur Befestigung von Gegenständen insbesondere sperrigen Gegenständen an vorzugsweise zwei Querträgem 8, die in Fahrzeuglängsrichtung im Abstand an den Träger schienen in geeigneten Positionen fixiert sind, kann an einem jeweiligen Querträger 8 wenigstens ein Aufsatzelement 14 vorgesehen sein (Fig. 5(A) bis (G)). Das Aufsatzelement 14 kann in seiner entarretierten bzw. entriegelten Stellung längs dem Querträger 8 verschoben werden. Durch Arretierung bzw. Verriegelung kann es in einer jeweiligen geeigneten Position am Querträger 8 fixiert werden. Am Aufsatzelement 14 befindet sich eine Halteeinrichtung 16. Die Halteeeinrichtung 16 ist um eine zur Längsausdehnung des Querträgers 8 senkrecht insbesondere horizontal verlaufende Achse 15 schwenkbar am Aufsatzelement 14 gelagert. Die Schwenkachse 15 kann von einem am Klemmbakken 17 abgestützten Lagerzapfen 76 gebildet werden. Die Halteeinrichtung kann innerhalb eines spitzen Schwenkwinkels, der bis etwa 60°, insbesondere ca. 40° betragen kann, verschwenkt werden. Die Verschwenkung der Halteeinrichtung 16 kann zwischen einer ersten unteren Position (Fig. 5(B)), in welcher die Halteeinrichtung 16 eine im wesentlichen horizontale Lage einnimmt, und einer oberen Endstellung, in die die Halteeinrichtung 16 um den spitzen Schwenkwinkel nach oben verschwenkt werden kann, erfolgen. Die Halteeinrichtung 16 bildet ein Teil des Aufsatzelements 14. Ein zweites Teil des Aufsatzelements 14 ist ein am Querträger 8 verschiebbares Teil, das im wesentlichen von Klemmbacken 17 und 18 gebildet wird. Die Klemmbacken 17, 18 dienen zur Fixierung des Aufsatzelementes 14 , wobei die Klemmbacken in eine Klemmstellung gebracht werden. Zum Verschieben des Aufsatzelements 14 entlang dem Querträger 8 wird diese Klemmstellung gelöst.

Um das Arretieren des Aufsatzelementes 14 mit Klemmsitz am Klemmträger 8 zu erzielen, kann einer der beiden Klemmbacken, nämlich der Klemmbacken 18, beweglich am Aufsatzelement 14 gelagert sein. Der Klemmbacken 18 ist hierzu insbesondere in horizontaler Richtung senkrecht zur Ausdehnung des Querträger 8 beweglich am Aufsatzelement 14 gelagert. Parallele an den Klemmbacken 18 angeformte Führungsstege 73 (Fig. 5 (B)) dienen zur Führung am Klemmbacken 17. Zur Verschiebung des Klemmbakkens 18 dient ein von Hand betätigbares Betätigungselement 20 in Form einer Hebelwirkung aufweisenden Klappe. Das Betätigungselement 20 ist um eine Achse 22 schwenkbar gelagert. Beim Verschieben des Klemmbackens 18 in die Klemmposition ist diese Achse im wesentlichen horizontal bzw. parallel zur Längsausdehnung des Querträgers 8 angeordnet. Um diese Achse 22 ist eine Betätigungsfläche 41 vorgesehen, die im Querschnitt einen sich vergrößernden Abstand zur Achse 22 aufweist (schnittbildliche Darstellung der Fig. 5(C)). Die Betätigungsfläche 41 liegt an einer Anlagefläche 43 des Klemmbackens 18 an. Die Anlagefläche 43 besitzt einen im wesentlichen kreisförmigen Querschnitt. Wenn das Betätigungselement 20 aus der gelösten Position (Fig. 5(C)) in Richtung eines Pfeiles 42 (entgegen dem Uhrzeigersinn) verschwenkt wird, wird die an der Anlagefläche 43 anliegende Betätigungsfläche 41 aus einem Bereich, der einen geringeren Abstand von der Achse 22 aufweist, in einen Bereich verschwenkt, der einen größeren Abstand zur Achse 22 besitzt. Hierdurch wird der Klemmbacken 18 in Richtung eines Pfeiles 44 in die Klemmstellung gebracht, so daß das Aufsatzelement 14 am Querträger 8 in einer gewünschten Position durch Klemmsitz arretiert bzw. fixiert werden kann (Fig. 5(G)).

Am Aufsatzelement 14 insbesondere am festen Klemmbacken 17 ist ein Arretierelement 19 (Fig. 5 (B)) senkrecht zur Längsausdehnung des Querträgers 8 beweglich gelagert. Das Arretierelement 19 erstreckt sich auch durch den Klemmbacken 18. Das Arretierelement 19 ist bevorzugt als Arretierstift ausgebildet, der in Richtung seiner Längsachse 21 beweglich am Aufsatzelement bzw. den Klemmbacken 17, 18 gelagert ist. Das stiftförmige Arretierelement 19 kann mit einem Arretierende 45 über eine von einer Rückenseite einer Platine 74 definierten Arretierungsebene 46 (Fig. 5 (G)) hinaus und hinter diese Arretierungsebene 46 hinausbewegt werden. In einer von der Vorderseite der an der Halteeinrichtung 16 befestigten Platine 74 gebildeten Berührungsebene liegen Begrenzungsflächen der Halteeinrichtung 16 und des Klemmbackens 17 gleitend aneinander. Durch das Arretierende 45 (Fig. 5 (D)) kann die Halteeinrichtung 16 in verschiedenen Winkelpositionen beim Verschwenken um die Schwenkachse 15 (Fig. 5 (A), (B)) gehalten werden.

Um die horizontale Stellung der Halteeinrichtung 16 am Aufsatzelement 14 zu fixieren, kann in der in der Platine 74 der Halteeinrichtung 16 um die Schwenkachse 15 eine kreisbogenförmige Ausnehmung bzw. Kulisse 75 vorgesehen sein, durch die das Arretierende 45 ragt. Das obere geschlossene Ende der kreisbogenförmigen Ausnehmung 75 liegt bei horizontaler Positionierung der Halteeinrichtung 16 an dem durch die Ausnehmung ragenden stiftförmigen Arretierelement 19 an. Das gegenüber der schlitzförmigen Ausnehmung 75 verbreiterte Arretierende 45 liegt beim Festklemmen der Klemmbacken 17, 18 am Querträger 8 an der Rückseite (Arretierungsebene 46) der Platine 74 an, so daß die Klemmkraft an der Rückseite der Platine 74 abgestützt wird. Gleichzeitig läßt sich hierdurch die Halteeinrichtung 16 in verschiedenen Winkelpositionen beim Verschwenken um die Schwenkachse 15 arretieren.

Wenn eines oder beide Enden der kreisbogenförmigen Ausnehmung 75 offen sind, kann auch eine Verschwenkung der Halteeinrichtung 16 nach unten gegen einen beispielsweise im Bereich des Lagerzapfens 76 vorgesehenen Anschlag vorgesehen werden. Auch kann eine über den kreisbogenförmigen Bereich der Ausnehmung 75 hinaus erfolgende Verschwenkung der Halteeinrichtung 16 erfolgen, wenn das untere Ende dieser Ausnehmung offen ist.

Am anderen Ende des stiftförmigen Arretierungselementes 19 kann die Achse 22, um welche das Betätigungselement 20 schwenkbar gelagert ist, vorgesehen sein. Die Achse 22 kann von einem an das Arretierelement 19 angeformten bzw. an diesem befestigten Stift gebildet sein. Durch die stiftförmige Ausbildung des Arretierelements 19 kann dieses um seine Längsachse 21 verdrehbar am Aufsatzelement bzw. den festen Klemmbacken 17 gelagert sein. Hierdurch wird ferner eine Verschwenkbarkeit des Betätigungselementes 20 um die Längsachse 21 des Arretierelementes 19 ermöglicht. Hierdurch kann die Betätigungsfläche 41 von der Anlagefläche 43 gelöst werden und in dieser gelösten Stellung voneinander gehalten werden.

An der Halteeinrichtung 16 sind Halteelemente vorgesehen, um unterschiedliche Gegenstände an der Halteeinrichtung befestigen zu können. Diese Halteelemente können beispielsweise aus Fixierschrauben 23 (Fig. 5 (E)) bestehen, welche an einem Fixierstift 50 gelagert sind. Es genügt, wenn eine der beiden Fixierschrauben 23 auf ein Gewinde des Fixierstiftes 50 aufgeschraubt ist, während die andere Fixierschraube fest mit dem Fixierstift verbunden ist. Zwischen den Fixierschrauben 23 und Anschlägen 52 an der Halteeinrichtung 16 können Federn insbesondere um den Fixierstift 50 gewickelte Schraubenfedern 51 vorgesehen sein. Auf dem Fixierstift 50 und zwischen den Anschlägen 52 und den Fixierschrauben 23 können Gabelenden einer Vorderradgabel eines Fahrrades eingesetzt und durch Anziehen einer der beiden Fixierschrauben 23 an der Halteeinrichtung 16 fixiert werden. Es ist auch möglich, Haltestangen 25a für einen Sattelhalter oder Haltestangen 25b zum Halten eines Lenkers eines Fahrrades (Fig. 2) am Fixierstift 50 oder sonstwie zu lagern.

Ferner können an der Halteeinrichtung 16 eine oder mehrere Einstecköffnungen 53 vorgesehen sein, in die eine oder mehrere Haltestangen 24 für Vorderradhalter (Fig. 5 (F) und (G)) eingesetzt werden können. Am oberen Ende der jeweiligen Vorderradhalterstange kann ein Vorderrad 54 eines Fahrrades befestigt werden (Fig. 5 (F))).

Wie schon erläutert, kann die Halteeinrichtung 16 in eine obere oder untere Stellung um die Schwenkachse 15 verschwenkt werden, so daß die Einbauhöhe des an der Halteeinrichtung befestigten Fahrrades verringert werden kann. An den Fixierelementen der Halteeinrichtung 16 können die Haltestangen schwenkbar angelenkt sein, wobei mit Hilfe der Fixierschrauben 23 die Haltestangen in jeder gewünschten Schwenkposition fixiert werden können. Die Haltestangen können in der Weise ausgebildet sein, daß sie bestimmten Bauteilen eines Fahrrades oder eines anderen Gegenstandes, der im Gepäckraum des Fahrzeugs transportiert werden soll, fest verbunden werden können. Hierdurch wird eine sichere Lagerung des Gegenstandes im Gepäckraum des Fahrzeugs während des Fahrbetriebes gewährleistet.

Die in den Fig. 6, 7 und 8 gezeigte Ladeplattform 7 kann, wie in der Fig.1 gezeigt ist, entlang ihren Seitenkanten in den Tragschienen 1 gelagert werden. Hierzu können die Seitenkanten bevorzugt in die Längsnuten 4 der Trägerschienen 1 eingesetzt sein. Mittels der Gleitelemente 47 (Fig. 1) wird ein einfaches Verschieben der Plattform 7 in den Führungsnuten 4 erreicht. Mit Hilfe der Eingriffsmittel 57 (Fig. 6), wird eine Fixierung der Ladeplattform 7 an den Trägerschienen 1 erzielt, Hierbei können die Eingriffsmittel 57 in die entsprechende Ausnehmungen (Öffnungen) 6 der Trägerschienen 1 (Fig. 2 und 3) eingreifen. Diese Arretierung der Ladeplattform 7 erfolgt durch Federkraft, welche auf die Eingriffsmittel 12 wirkt und sie in die entsprechenden Ausnehmungen 6 der Trägerschienen drückt. Mit Hilfe einer von Hand betätigbaren Drucktaste 55 können die Eingriffsmittel 57 gegen die Kraft der Verriegelungsfeder aus ihrer Eingriffsstellung durch Herausziehen aus den Ausnehmungen 6 gelöst werden, so daß die Ladeplattform entlang der Führungsnut 4 in den Trägerschienen 1 verschoben bzw. aus der Trägerschiene 1 entnommen werden kann. Die Drucktastenbewegung wird über einen Gelenkmechanismus 56 auf das Eingriffsmittel 57 an einer oder beiden Seitenkanten der Ladeplattform 7 übertragen.

Es ist jedoch auch möglich, unter Beibehaltung der Verriegelungsstellung der Eingriffsmittel 57 in den Ausnehmungen 6 der Trägerschienen die Trägerschienen 1 nach Lösen der Verriegelung, mit welcher die Trägerschienen 1 an dem Teleskopträger 13 verriegelt sind, aus dem Gepäckraum des Fahrzeugs herauszuziehen. Hierzu wird eine bevorzugt an der Rückseite der Ladeplattform 7 vorgesehene Betätigungseinrichtung 26 von Hand betätigt. Die Bewegung der vorzugsweise als handbetätigbare Klappe ausgebildeten Betätigungseinrichtung 26 wird über Stangen 34 mit seitlich überstehenden Stangenenden 12 auf die Drucktasten 38 der Trägerschienenverriegelung übertragen. Durch die Bewegung des jeweiligen Stangenendes 12 oder Betätigungselementes am Stangenende wird die Drucktaste 38 (Fig. 3) zum Entriegeln der Trägerschienenverriegelung insbesondere durch Eindrücken betätigt. Hierdurch werden die Trägerschienen 1 aus ihrer mit den Teleskopträgern 13 verriegelten Stellung gelöst, so daß die Trägerschienen 1 aus dem Gepäckraum teleskopartig herausgezogen werden können. Es ist möglich, mit Hilfe einer Betätigunseinrichtung 26 am Ende der Ladeplattform die entsprechenden Trägerschienenverriegelungen gemeinsam zu lösen. Die Trägerschienenverriegelungen können in der Weise ausgebildet sein, wie es oben im Zusammenhang mit der Fig. 3 beschrieben wurde.

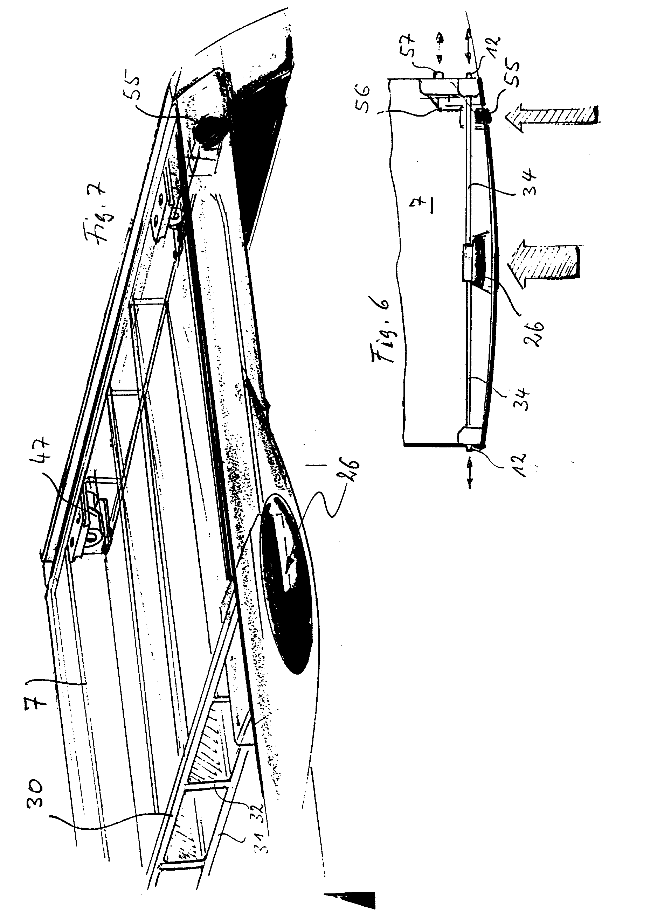

Wie aus der Fig. 7 zu ersehen ist, wird die Ladeplattform 7 von einer oberen Platte 30 und einer unteren Platte 31 gebildet, wobei die beiden Platten durch Abstandhalter 32 voneinander im Abstand gehalten werden. Die Abstandhalter 32 können Rechteckhohlprofile bilden. Hierbei können die Platten 30 und 31 sowie die Abstandhalter 32 einstückig aus einem Strangpreßprofil durch entsprechendes Ablängen aus einem Strangpreßprofil gebildet sein. In bevorzugter Weise besteht die Plattform 7 aus Leichtmetall insbesondere Aluminium.

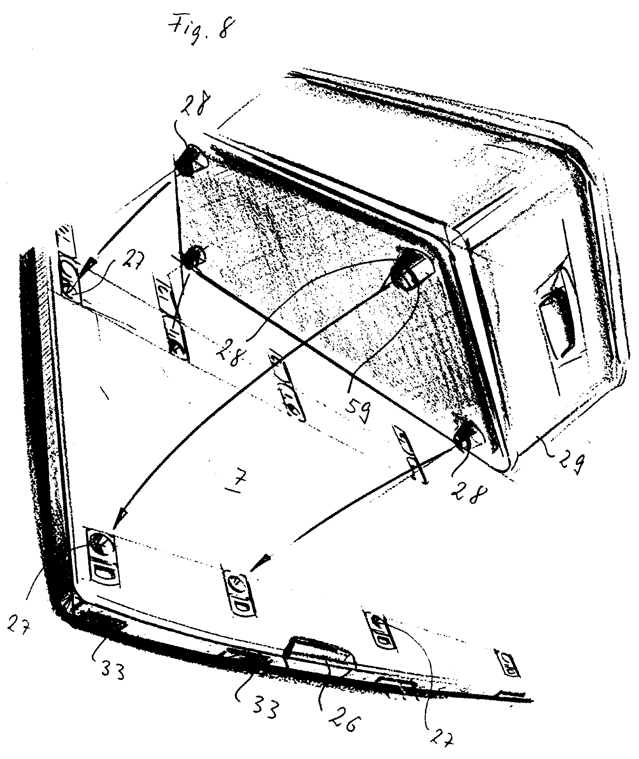

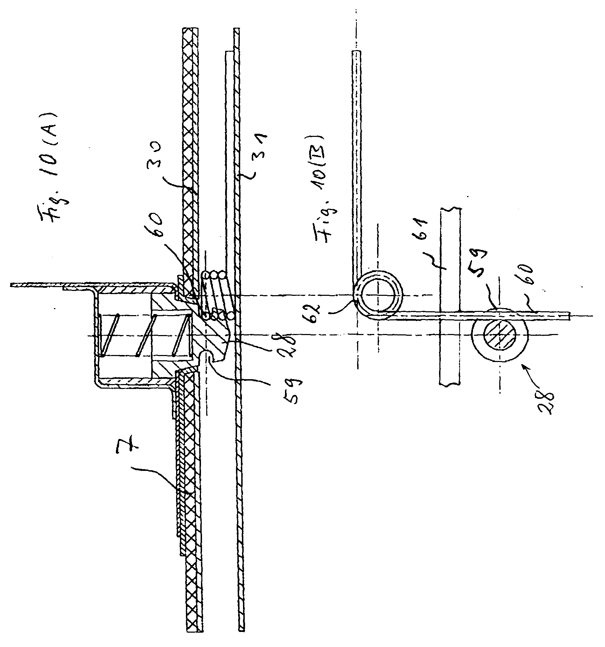

Wie aus den Figuren 1 und 8 zu ersehen ist, kann die Ladeplattform 7 Fixierungsadapter, beispielsweise in Form von Vertiefungen 27, in der Oberfläche der Ladeplattform aufweisen. In diese Vertiefungen passen formschlüssig Füße 28 (Fig. 8), welche an der Unterseite von Behältern 29 angeordnet sind. An den Füßen 28 befinden sich Rastnuten 59, in die entsprechende Rastelemente 60 beispielsweise in Form von quer verlaufenden Stegen in den Vertiefungen 27 eingreifen können (Fig. 10 (A) und (B)). Die Rastelemente 60 stehen unter Federspannung, so daß beim Einsetzen der Füße 28 in die Vertiefungen 27 die Rastelemente 60 selbstätig in die Rastnuten 59 gedrückt werden. An jedem Behälter 29 können beispielsweise vier Füße 28, die gegebenenfalls gefedert gelagert sind (Fig. 10(A)), vorgesehen sein. Hierdurch wird eine eindeutige Fixierung eines jeden Behälter 29 an der Plattform 7 erreicht. Auf der Plattform 7 können mehrere Vertiefungen 27 (Fixierungsadapter) in jeweils Viereranordnung für einen jeweiligen Behälter 29 vorgesehen sein. Mit Hilfe von zugeordneten Drucktasten 33 an der rückwärtigen Kante der Plattform 7 können die Rastelemente 60 aus den Rastnuten 59 entfernt werden, so daß die Behälter 29 von der Plattform 7 abgehoben werden können. Zur Entriegelung wird die Drucktastenbewegung 33 beispielsweise über ein Schubstangensystem 61, welches an den mehreren Verriegelungselementen 60 angreift, auf die Verriegelungselemente 60 gegen die einrastende Federkraft übertragen, und die Verriegelungselemtne 60 werden aus den Verriegelungspositionen gelöst. Hierzu kann das in der Fig. 8 schematisch dargestelltes Schubstangensystem 61, das an den quer verlaufenden Abstandhaltern 32 (Fig. 7) gelagert ist und für die Fixierungsadapters eines Behälters oder mehrere Behälter gleichzeitig betätigbar ist, vorgesehen sein. Auf das gemeinsame Schubstangensystem 61 kann eine Verriegelungsfeder 62, welche ebenfalls an einem der Abstandhalter 32 abgestützt ist, als Verriegelungskraft wirken.

## Patentansprüche

1. Vorrichtung zum Befestigen von Gegenständen im Gepäckraum eines Kraftfahrzeuges mit einer ausziehbaren Trägereinrichtung, an welcher die Gegenstände gelagert und befestigt sind, wobei die ausziehbare Trägereinrichtung, welche lösbar an der Fahrzeugkarosserie oder karosseriefesten Fahrzeugteilen befestigt ist, zwei in Fahrzeugslängsrichtung verlaufende teleskopierbare Trägerschienen aufweist und die Trägerschiene Fixiermittel zum lösbaren Befestigen unterschiedlicher Lastträger, an denen die Gegenstände befestigt sind, aufweisen,
dadurch gekennzeichnet,
daß jede teleskopierbare Trägerschiene (1) an einem sich in Fahrzeuglängsrichtung erstreckenden Teleskopträger (13) geführt ist und daß der jeweilige Teleskopträger (13) an seinen beiden Enden mit der Fahrzeugkarosserie bzw. den karosseriefesten Fahrzeugteilen (2,3) mittels lösbarer Verriegelungsmittel (9,10) befestigt ist.

2. Vorrichtung nach Anspruch 1, dadurch gekennzeichnet, daß der jeweilige Lastträger (7,8) sich quer zur Fahrzeuglängsrichtung erstreckt und an den Fixiermitteln (5,6) der Trägerschienen (1) lösbar befestigt ist.

3. Vorrichtung nach Anspruch 1 oder 2, dadurch gekennzeichnet, daß der Lastträger als Ladeplattform (7) ausgebildet ist.

4. Vorrichtung nach einem der Ansprüche 1 bis 3, dadurch gekennzeichnet, daß der Lastträger als stabförmiger quer zur Fahrzeuglängsrichtung sich erstreckender Querträger (8) ausgebildet ist.

5. Vorrichtung nach einem der Ansprüche 1 bis 4, dadurch gekennzeichnet, daß an einer außenliegenden Trägerschiene (1) der ineinanderliegenden teleskopierbaren Trägerschienen ein insbesondere als Nut (4) ausgebildetes längsverlaufendes Führungsmittel für den Lastträger (7,8) vorgesehen ist.

6. Vorrichtung nach einem der Ansprüche 1 bis 5, dadurch gekennzeichnet, daß an der außenliegenden Trägerschiene (1) die Fixiermittel (5,6) in Längsabständen voneinander vorgesehen sind.

7. Vorrichtung nach einem der Ansprüche 1 bis 6, dadurch gekennzeichnet, daß mit dem an der äußeren Trägerschiene (1) vorgesehenen Fixiermitteln (5,6) entsprechende geformte Eingriffsmittel (11,57) am Lastträger (7,8) in Eingriff bringbar sind.

8. Vorrichtung nach einem der Ansprüche 1 bis 7, dadurch gekennzeichnet, daß der formschlüssige Eingriff zwischen den Eingriffsmitteln (11, 57) am Lastträger (7,8) und den Fixiermitteln (5,6) an den äußeren Trägerschienen (1) durch Federkraft gehalten und von Federkraft gegen die Federkraft lösbar ist.

9. Vorrichtung nach einem der Ansprüche 1 bis 8, dadurch gekennzeichnet, daß die Fixiermittel (5,6) an den beiden äußeren Trägerschienen (1) an den einander zugekehrten Innenseiten der beiden Teleskopträger (13) liegen.

10. Vorrichtung nach einem der Ansprüche 1 bis 9, dadurch gekennzeichnet, daß die Trägerschienen (1) an den Teleskopträgern (13) durch eine lösbare Verriegelung gegen ihren Auszug verriegelbar sind.

11. Vorrichtung zum Befestigen von Gegenständen an einer Trägereinrichtung für ein Fahrzeug insbesondere nach einem der Ansprüche 1 bis 10 mit einem oder mehreren quer zur Fahrzeugslängsrichtung verlaufenden Querträgern,
dadurch gekennzeichnet, daß
- am Querträger (8) wenigstens ein entlang dem Querträger verschiebares Aufsatzelement (14) vorgesehen ist,
- das Aufsatzelement (14) in verschiedenen Positionen längs dem Querträger (8) fixierbar ist, und
- am Aufsatzelement (14) eine Halteeinrichtung (16) um eine quer zur Querträgerlängsausdehnung quer insbesondere senkrecht verlaufende Schwenkachse (15) schwenkbar gelagert ist und zumindest in zwei Endstellungen eines spitzen Schwenkwinkelbereichs am Aufsatzelement (14) fixierbar ist.

12. Vorrichtung nach Anspruch 11, dadurch gekennzeichnet, daß das Aufsatzelement (14) mit Klemmsitz am Querträger (8) in verschiedenen Positionen fixierbar ist.

13. Vorrichtung nach Anspruch 11 oder 12, dadurch gekennzeichnet, daß das Aufsatzelement (14) zwei Klemmbacken (17,18) aufweist, von denen wenigstens einer beweglich am Aufsatzelement (14) gelagert ist.

14. Vorrichtung nach einem der Ansprüche 11 bis 13, dadurch gekennzeichnet, daß am Aufsatzelement (14) zumindest ein quer zur Schwenkrichtung der Halteeinrichtung (16) bewegliches Arretierelement (19) vorgesehen ist, durch das die Halteeinrichtung (16) zumindest in einer der beiden Endstellungen am Aufsatzelement (14) arretierbar ist.

15. Vorrichtung nach Anspruch 14, dadurch gekennzeichnet, daß zur Betätigung des Arretierelementes (19) und der wenigstens einen Klemmbacke (18) ein gemeinsames Betätigungselement (20) vorgesehen ist.

16. Vorrichtung nach Anspruch 14 oder 15, dadurch gekennzeichnet, daß das Arretierelement (19) am Aufsatzelement (14) um eine zur Längsausdehnung des Querträgers (8) senkrecht verlaufende Achse (21) drehbar gelagert ist.

17. Vorrichtung nach einem der Ansprüche 14 bis 16, dadurch gekennzeichnet, daß das Arretierelement (19) stiftförmig ausgebildet ist.

18. Vorrichtung nach einem der Ansprüche 15 bis 17, dadurch gekennzeichnet, daß das Betätigungselement (20) für den wenigstens einen Klemmbacken (18) am Arretierelement (19) um eine zur Achse (21) des Arretierelementes (19) senkrechte Achse (22) schwenkbar ist.

19. Vorrichtung nach einem der Ansprüche 14 bis 18, dadurch gekennzeichnet, daß das stiftförmig ausgebildete Arretierelement (19) in seiner axialen Richtung am Aufsatzelement (14) verschiebbar gelagert ist.

20. Vorrichtung nach einem der Ansprüche 11 bis 19, dadurch gekennzeichnet, daß die Halteeinrichtung (16) zwischen einer oberen oberhalb der horizontalen und einer unteren unterhalb der horizontal liegenden Endstellung durch Verschwenken um die Schwenkachse (15) verstellbar ist.

21. Vorrichtung nach einem der Ansprüche 11 bis 20, dadurch gekennzeichnet, daß an der Halteeinrichtung (16) Halteelemente (23-25) vorgesehen sind, mit denen jeweilige Gegenstände an der Halteeinrichtung gehalten und befestigbar sind.

22. Vorrichtung zum Befestigen von Gegenständen im Gepäckraum eines Kraftfahrzeugs mit einer ausziehbaren Trägereinrichtung, an welcher die Gegenstände gelagert und befestigt sind, wobei die Trägereinrichtung eine als Ladeplattform ausgebildeten Lastträger aufweist, insbesondere nach einem der Ansprüche 1 bis 10, dadurch gekennzeichnet, daß die Ladeplattform (7) an ihren beiden in Längsrichtung verlaufenden Seitenkanten in die Trägerschienen (1) einsetzbar und an den Trägerschienen (1) arretierbar ist.

23. Vorrichtung nach Anspruch 22, dadurch gekennzeichnet, daß die Seitenkanten der Ladeplattform (7) in die Längsnuten (4) der Trägerschienen (1) eingesetzt sind.

24. Vorrichtung nach Anspruch 22 oder 23, dadurch gekennzeichnet, daß an der Ladeplattform (7) eine Betätigungseinrichtung (12, 26, 34) zum Entriegeln des Teleskopauszugs der Trägerschienen (1) vorgesehen ist.

25. Vorrichtung nach einem der Ansprüche 22 bis 24, dadurch gekennzeichnet, daß die Ladeplattform (7) Vertiefungen (27) aufweist, in die Füße (28), welche an Unterseiten von Behältern (29) vorgesehen sind, mit Federkraft arretierbar einsetzbar sind.

26. Vorrichtung nach Anspruch 25, dadurch gekennzeichnet, daß die Arretierungen (59,60) für die Behälterfüße (28) mittels einer Betätigungseinrichtung (33) gegen die arretierenden Federkraft gemeinsam lösbar sind.

27. Vorrichtung nach einem der Ansprüche 22 bis 26, dadurch gekennzeichnet, daß die Ladeplattform (7) eine obere Platte (30) und eine untere Platte (31) aufweist, welche parallel zueinander angeordnet sind und daß die beiden Platten (30,31) durch dazwischen angeordnete Abstandhalter (32) im Abstand voneinander gehalten sind.

28. Vorrichtung nach Anspruch 27, dadurch gekennzeichnet, daß die Abstandhalter (32) Rechteckhohlprofile bilden.

29. Vorrichtung nach Anspruch 27 oder 28, dadurch gekennzeichnet, daß die beiden Platten (30,31) und/oder die Abstandhalter (32) aus Leichtmetall insbesondere Aluminium bestehen.

30. Vorrichtung nach einem der Ansprüche 27 bis 29, dadurch gekennzeichnet, daß die beiden Platten (30,31) und die Abstandhalter (32) der Plattform (7) einstückig aus einem Strangpreßprofil gebildet sind.
